# EUROPEAN PATENT APPLICATION

(11) **EP 1 628 097 A2**
(43) Date of publication of application: **22.02.2006**
(21) Application number: 05001466.1
(22) Date of filing: 25.01.2005
(51) Int. Cl.: F25B 27/00

(54) **Air conditioning system combined with an electricity generating system**

(30) Priority: 17.08.2004 KR 2004064805
(71) Applicant: LG ELECTRONICS INC., Seoul 150-010 (KR)
(72) Inventor: Kim, Cheol Min, Manan-ku Anyang-si Kyungki-do 430-042 (KR); Ko, Cheol Soo, Kunpo-si Kyungki-do 435-040 (KR); Ha, Sim Bok, Seoul 153-023 (KR); Chung, Baik Young, 213-2 Yongjong-dong Kyeyang-ku Inchun-si (KR)
(74) Representative: Urner, Peter

(57) **Abstract**

A cogeneration system in which at least one of the heat of an engine-cooling heat exchanger and the heat of an exhaust gas heat exchanger is used in a heat consumer during a heating operation of the heat consumer, and the heat of the engine-cooling heat exchanger is transferred to a radiator to allow the transferred heat to be discharged from the radiator during a cooling operation of the heat consumer, so that it is possible to minimize the size of the radiator and the amount of air blown to the radiator, and to reduce costs and noise.

## Description

### BACKGROUND OF THE INVENTION

### Field of the Invention

The present invention relates to a cogeneration system, and, more particularly, to a cogeneration system in which only the heat of cooling water heated while cooling an engine during a cooling operation of a heat consumer is released from the cooling water through a radiator.

### Description of the Related Art

In general, cogeneration systems include an engine, a generator to generate electricity, using a rotating force outputted from the engine, a radiator to discharge exhaust heat of the engine, and a heat transfer means to supply the exhaust heat of the engine to a heat consumer such as a water heater or an air conditioner.

Electricity generated from the generator is used to operate various electrical devices such as electric lamps and air conditioners.

The radiator absorbs waste heat of cooling water used to cool the engine and waste heat of exhaust gas discharged from the engine, and discharges the absorbed waste heat to the atmosphere.

However, such a conventional cogeneration system has problems in that the radiator must discharge both the waste heat of the engine cooling water and the waste heat of the exhaust gas, so that the size of the radiator, the amount of air blown to the radiator, noise and costs are increased.

### SUMMARY OF THE INVENTION

The present invention has been made in view of the above-mentioned problems, and it is an object of the invention to provide a cogeneration system in which only the heat of cooling water heated while cooling an engine during a cooling operation of a heat consumer is released from the cooling water through a radiator, so that is it possible to reduce the size of the radiator, the amount of air blown to the radiator, noise and costs.

In accordance with one aspect, the present invention provides a cogeneration system comprising: an engine; a generator connected to an output shaft of the engine to generate electricity; an engine-cooling heat exchanger to absorb heat from cooling water used to cool the engine; an exhaust gas heat exchanger to absorb heat from exhaust gas discharged from the engine; a heat consumer switchable to operate between a cooling mode and a heating mode; a radiator to discharge heat; and heat transfer means to transfer, to the heat consumer, at least one of the heat absorbed by the engine-cooling heat exchanger and the heat absorbed by the exhaust gas heat exchanger during an operation of the heat consumer in the heating mode, and thus, to allow the heat consumer to use the transferred heat, and to transfer, to the radiator, the heat absorbed by the engine-cooling heat exchanger during an operation of the heat consumer in the cooling mode, and thus, to cause the heat transferred to the radiator to be discharged from the radiator.

The heat consumer may be a heat pump type air conditioner, which comprises a compressor, a directional valve, an indoor heat exchanger, an expansion device, and an outdoor heat exchanger.

The heat pump type air conditioner may use the electricity generated from the generator.

The heat pump type air conditioner may further comprise a pre-heater to receive heat from the heat transfer means, and thus, to pre-heat air blown toward the outdoor heat exchanger.

The heat pump type air conditioner may further comprise a compressor discharge line heater to receive heat from the heat transfer means, and thus, to heat a refrigerant passing through a discharge line of the compressor.

At least one of the engine, the generator, the compressor, the directional valve, the indoor heat exchanger, the expansion device, and the outdoor heat exchanger may comprise a plurality of ones.

The radiator may comprise a radiator heat exchanger connected to the heat transfer means, and a radiator fan to blow outdoor air to the radiator heat exchanger.

The heat transfer means may comprise: a pre-heater circulation conduit to guide the heat medium to be circulated around the engine-cooling heat exchanger, the exhaust gas heat exchanger, and the pre-heater; a radiator circulation conduit to guide the heat medium to be circulated around the engine-cooling heat exchanger and the radiator; and a heat medium circulation pump to pump the heat medium, and thus, to circulate the heat medium through the pre-heater circulation conduit or the radiator circulation conduit.

The heat medium circulation pump may be directly connected to the pre-heater circulation conduit between the engine-cooling heat exchanger and the exhaust gas heat exchanger. The radiator circulation conduit may be branched from the pre-heater circulation conduit between the heat medium circulation pump and the exhaust gas heat exchanger, and may be joined to the pre-heater circulation conduit, upstream from the engine-cooling heat exchanger.

The heat transfer means may further comprise valve means to open/close the pre-heater circulation conduit or the radiator circulation conduit.

The valve means may comprise: a first valve arranged at a branching region where the radiator circulation conduit is branched from the pre-heater circulation conduit; and a second valve arranged at a joining region where the radiator circulation conduit is joined to the pre-heater circulation conduit.

The heat transfer means may further comprise: a controller to control the first and second valves to operate, during a heating operation of the heat pump type air conditioner, in a pre-heater circulation mode in which the pre-heater circulation conduit is opened, and the radiator circulation conduit is closed, and to operate, during a cooling operation of the heat pump type air conditioner, in a radiator circulation mode in which the pre-heater circulation conduit is closed, and the radiator circulation conduit is opened.

In accordance with another aspect, the present invention provides a cogeneration system comprising: an engine; a generator connected to an output shaft of the engine to generate electricity; an engine-cooling heat exchanger to absorb heat from cooling water used to cool the engine; an exhaust gas heat exchanger to absorb heat from exhaust gas discharged from the engine; a heat pump type air conditioner to use the electricity generated from the generator, the heat pump type air conditioner comprising a compressor, a directional valve, an indoor heat exchanger, an expansion device, and an outdoor heat exchanger; a pre-heater to pre-heat air blown toward the outdoor heat exchanger; a radiator to discharge heat; and heat transfer means to transfer, to the pre-heater, at least one of the heat absorbed by the engine-cooling heat exchanger and the heat absorbed by the exhaust gas heat exchanger during a heating operation of the heat pump type air conditioner, and to transfer, to the radiator, the heat absorbed by the engine-cooling heat exchanger during a cooling operation of the heat pump type air conditioner, and thus, to cause the heat transferred to the radiator to be discharged from the radiator.

In accordance with another aspect, the present invention provides a cogeneration system comprising: an engine; a generator connected to an output shaft of the engine to generate electricity; an engine-cooling heat exchanger to absorb heat from cooling water used to cool the engine; an exhaust gas heat exchanger to absorb heat from exhaust gas discharged from the engine; a heat pump type air conditioner to use the electricity generated from the generator, the heat pump type air conditioner comprising a compressor, a directional valve, an indoor heat exchanger, an expansion device, and an outdoor heat exchanger; a compressor discharge line heater to heat a refrigerant passing through a discharge line of the compressor; a radiator to discharge heat; and heat transfer means to transfer, to the compressor discharge line heater, at least one of the heat absorbed by the engine-cooling heat exchanger and the heat absorbed by the exhaust gas heat exchanger during a heating operation of the heat pump type air conditioner, and to transfer, to the radiator, the heat absorbed by the engine-cooling heat exchanger during a cooling operation of the heat pump type air conditioner, and thus, to cause the heat transferred to the radiator to be discharged from the radiator.

The cogeneration system according to the present invention has advantages in that at least one of the heat of the engine-cooling heat exchanger and the heat of the exhaust gas heat exchanger is used in the heat consumer during a heating operation of the heat consumer, and the heat of the engine-cooling heat exchanger is transferred to the radiator to allow the transferred heat to be discharged from the radiator during a cooling operation of the heat consumer, so that it is possible to minimize the size of the radiator and the amount of air blown to the radiator, and to reduce costs and noise.

The cogeneration system according to the present invention also has an advantage in that the heat consumer is the heat pump type air conditioner including the compressor, directional valve, indoor heat exchanger, expansion device, and outdoor heat exchanger, and the heat pump type air conditioner further includes the pre-heater to receive heat from the heat transfer means during a heating operation of the heat pump type air conditioner, and thus, to pre-heat air blown toward the outdoor heat exchanger, so that it is possible to prevent the outdoor heat exchanger from being frosted during the heating operation of the heat pump type air conditioner.

In addition, the cogeneration system according to the present invention has an advantage in that the heat consumer is the heat pump type air conditioner including the compressor, directional valve, indoor heat exchanger, expansion device, and outdoor heat exchanger, and the heat pump type air conditioner further includes the compressor discharge line heater to receive heat from the heat transfer means during a heating operation of the heat pump type air conditioner, and thus, to heat the discharge line of the compressor, so that it is possible to enhance the heating performance of the indoor heat exchanger during the heating operation of the heat pump type air conditioner.

### BRIEF DESCRIPTION OF THE DRAWINGS

The above objects, and other features and advantages of the present invention will become more apparent after reading the following detailed description when taken in conjunction with the drawings, in which:
FIG. 1 is a schematic diagram of a cogeneration system according to a first embodiment of the present invention, illustrating a state in which a heat pump type air conditioner included in the cogeneration system operates in a heating mode;
FIG. 2 is a schematic diagram of the cogeneration system according to the first embodiment of the cogeneration system, illustrating a state in which the heat pump type air conditioner operates in a cooling mode;
FIG. 3 is a schematic diagram of a cogeneration system according to a second embodiment of the present invention, illustrating a state in which a heat pump type air conditioner included in the cogeneration system operates in a heating mode;
FIG. 4 is a schematic diagram of the cogeneration system according to the first embodiment of the cogeneration system, illustrating a state in which the heat pump type air conditioner operates in a cooling mode;
FIG. 5 is a schematic diagram of a cogeneration system according to a third embodiment of the present invention, illustrating a state in which a heat pump type air conditioner included in the cogeneration system operates in a heating mode;
FIG. 6 is a schematic diagram of the cogeneration system according to the third embodiment of the cogeneration system, illustrating a state in which the heat pump type air conditioner operates in a cooling mode;
FIG. 7 is a schematic diagram of a cogeneration system according to a fourth embodiment of the present invention, illustrating a state in which a heat pump type air conditioner included in the cogeneration system operates in a cooling mode;
FIG. 8 is a schematic diagram of a cogeneration system according to a fifth embodiment of the present invention, illustrating a state in which a heat pump type air conditioner included in the cogeneration system operates in a cooling mode; and
FIG. 9 is a schematic diagram of a cogeneration system according to a sixth embodiment of the present invention, illustrating a state in which a heat pump type air conditioner included in the cogeneration system operates in a cooling mode.

### DESCRIPTION OF THE PREFERRED EMBODIMENTS

Hereinafter, exemplary embodiments of a cogeneration system according to the present invention will be described with reference to the annexed drawings.

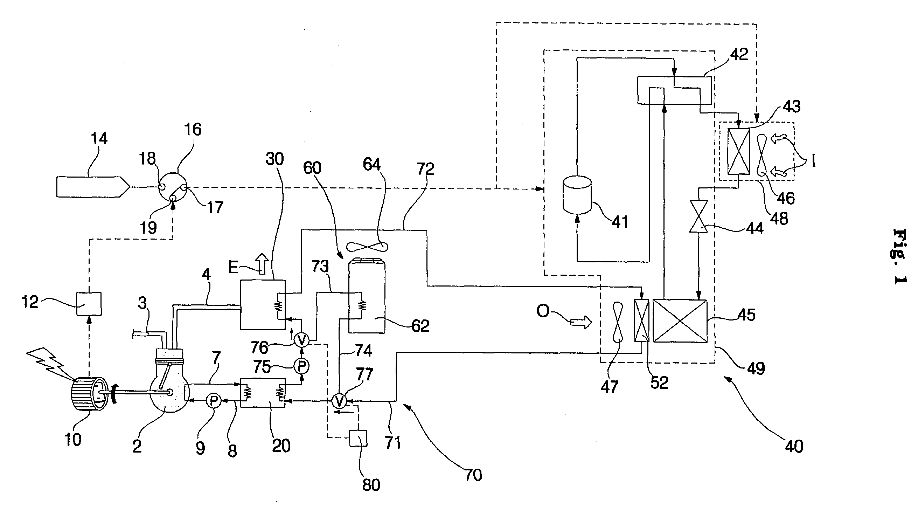

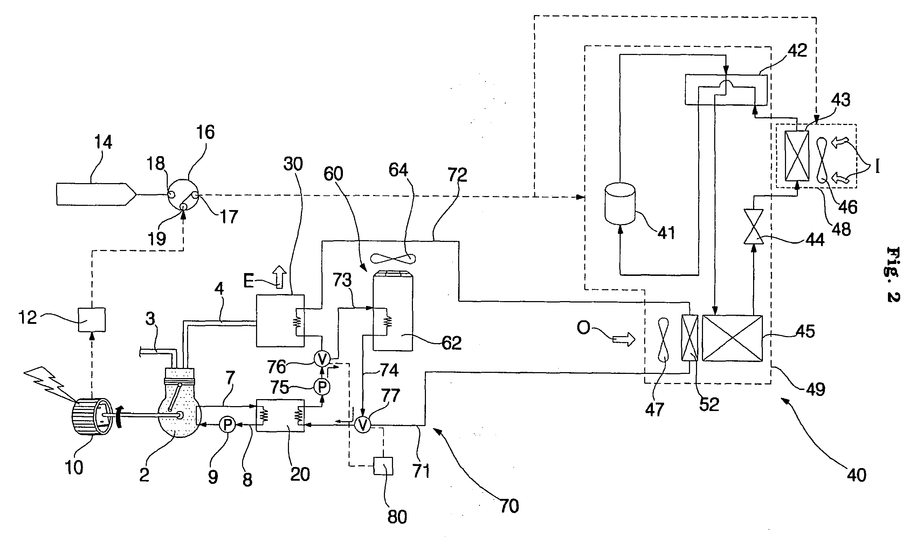

FIG. 1 is a schematic diagram of a cogeneration system according to a first embodiment of the present invention, illustrating a state in which a heat pump type air conditioner included in the cogeneration system operates in a heating mode. FIG. 2 is a schematic diagram of the cogeneration system according to the first embodiment of the cogeneration system, illustrating a state in which the heat pump type air conditioner operates in a cooling mode.

As shown in FIGS. 1 and 2, the cogeneration system includes an engine 2, a generator 10 connected to an output shaft of the engine 2 to generate electricity, an engine-cooling heat exchanger 20 to absorb heat from cooling water used to cool the engine 2, and an exhaust gas heat exchanger 30 to absorb heat from exhaust gas discharged from the engine 2. The cogeneration system also includes a heat consumer 40 switchable to operate between a cooling mode and a heating mode, a radiator 60 to discharge heat, and a heat transfer means to transfer, to the heat consumer 40, the heat absorbed by the engine-cooling heat exchanger 20 and exhaust gas heat exchanger 30 during operation of the heat consumer 40 in the heating mode, and to transfer, to the radiator 60, the heat absorbed by the engine-cooling heat exchanger 20 during operation of the heat consumer 40 in the cooling mode, and thus, to cause the heat transferred to the radiator 60 to be discharged from the radiator 60.

The engine 2 includes a combustion chamber defined in the interior of the engine 2.

A fuel tube 3 and an exhaust tube 4 are connected to the engine 2. The fuel tube 3 is adapted to supply fuel such as liquefied gas or liquefied petroleum gas into the combustion chamber. The exhaust tube 4 is adapted to guide exhaust gas discharged from the combustion chamber.

The exhaust tube 4 is arranged between the engine 2 and the exhaust gas heat exchanger 30.

The engine-cooling heat exchanger 20 is connected to the engine 2 via cooling water circulation conduits 7 and 8 so that the cooling water, which is heated while cooling the engine 2, transfers heat to the engine-cooling heat exchanger 20 while passing through the engine-cooling heat exchanger 20, and is then again circulated into the engine 2.

A cooling water circulation pump 9 is connected to one of the engine 2, engine-cooling heat exchanger 20, and cooling water circulation conduits 7 and 8.

The generator 10 may be an AC generator or a DC generator.

An inverter 12 is coupled to the generator 10 to perform DC/AC conversion on electricity generated from the generator 10.

The above-described cogeneration system may be implemented to supply only the electricity generated from the generator 10 to the heat consumer 40 or to selectively supply the electricity generated from the generator 10 or electricity supplied from an external electricity supply source 14 to the heat consumer 40. For simplicity of description, the following description will be given only in conjunction with the case in which the electricity generated from the generator 10 or electricity supplied from an external electricity supply source 14 is selectively supplied to the heat consumer 40.

An electricity supply switch 16 is connected to the external electricity supply source 14. The electricity supply switch 16 has an output terminal 17 connected to the heat consumer 40 via an electricity feed line. The electricity supply switch 16 also has a first input terminal 18 connected to the external electricity supply source 14 via an electricity feed line, and a second input terminal 19 connected to the generator 10 via an electricity feed line.

When the electricity supply switch 16 is switched to an external electricity supply mode, the electricity feed lines of the external electricity supply source 14 and heat consumer 40 are connected by the electricity supply switch 16. In this case, accordingly, the electricity from the external electricity supply source 14 is supplied to the heat consumer 40. On the other hand, when the electricity supply switch 16 is switched to a generator electricity supply mode, the electricity supply lines of the generator 10 and heat consumer 40 are connected by the electricity supply switch 16. In this case, accordingly, the electricity from the generator 10 is supplied to the heat consumer 40.

For convenience of description, the following description will be given only in conjunction with the case in which the electricity generated from the generator 10 is supplied to the heat consumer 40.

The heat consumer 40 comprises a heat pump type air conditioner, which includes a compressor 41, a directional valve 42, an indoor heat exchanger 43, an expansion device 44, and an outdoor heat exchanger 45.

The heat pump type air conditioner 40 further includes an indoor fan 46 to blow indoor air to the indoor heat exchanger 43, and an outdoor fan 47 to blow outdoor air to the outdoor heat exchanger 45.

The indoor heat exchanger 43 and indoor fan 46 constitute an indoor unit 48 of the heat pump type air conditioner 40. The compressor 41, directional valve 42, expansion device 44, outdoor heat exchanger 45, and outdoor fan 47 constitute an outdoor unit 49 of the heat pump type air conditioner 40.

The heat pump type air conditioner 40 further includes a pre-heater 52 to receive heat from the heat transfer means 70, and thus, to pre-heat air fed toward the outdoor heat exchanger 45.

The pre-heater 52 is arranged upstream from the outdoor heat exchanger 45 with respect to a flowing direction of outdoor air O blown toward the outdoor heat exchanger 45 to heat the blown outdoor air O.

The radiator 60 includes a radiator heat exchanger 62 connected to the heat transfer means 70, and a radiator fan 64 to blow the outdoor air O to the radiator heat exchanger 62.

The heat transfer means 70 includes pre-heater circulation conduits 71 and 72 to guide a heat medium to be circulated around the engine-cooling heat exchanger 20, exhaust gas heat exchanger 30, and pre-heater 52, radiator circulation conduits 73 and 74 to guide the heat medium to be circulated around the engine-cooling heat exchanger 20 and radiator 60, and a heat medium circulation pump 75 to pump the heat medium, and thus, to circulate the heat medium through the pre-heater circulation conduits 71 and 72 or the radiator circulation conduits 73 and 74.

The radiator circulation conduits 73 and 74 are branched from the radiator circulation conduit 71 or 72 between the heat medium circulation pump 75 and the exhaust gas heat exchanger 30, and are joined to the radiator circulation conduit 71 or 72 upstream from the engine-cooling heat exchanger 20.

The heat medium circulation pump 75 is directly connected to the pre-heater circulation conduit 71 or 72 between the engine-cooling heat exchanger 20 and the exhaust gas heat exchanger 40.

The heat transfer means 70 further includes a valve means to open/close the pre-heater circulation conduits 71 and 72 or the radiator circulation conduits 73 and 74.

The valve means includes a first valve 76 arranged at a branching region where the radiator circulation conduits 73 and 74 are branched from the pre-heater circulation conduit 71 or 72, and a second valve 77 arranged at a joining region where the radiator circulation conduits 73 and 74 are joined to the pre-heater circulation conduit 71 or 72.

The heat transfer means 70 further includes a controller 80 to control the first and second valves 76 and 77 to operate, during a heating operation of the heat pump type air conditioner 40, in a pre-heater circulation mode in which the pre-heater circulation conduits 71 and 72 are opened, and the radiator circulation conduits 73 and 74 are closed, and to operate, during a cooling operation of the heat pump type air conditioner 40, in a radiator circulation mode in which the pre-heater circulation conduits 71 and 72 are closed, and the radiator circulation conduits 73 and 74 are opened.

Hereinafter, operation of the cogeneration system having the above-described arrangement will be described.

When fuel is supplied into the engine 2 via the fuel tube 3, and the engine 2 is subsequently driven, the output shaft of the engine 2 is rotated, thereby causing the generator 10 to generate electricity.

Exhaust gas, which is discharged from the engine 2, is fed to the exhaust gas heat exchanger 30 via the exhaust tube 4, and is then discharged to the atmosphere after releasing its heat into the exhaust gas heat exchanger 30.

When the cooling water circulation pump 9 operates during the operation of the engine 2, the cooling water, which is heated while cooling the engine 2, is fed to the engine-cooling heat exchanger 20 via the cooling water circulation conduit 7, and is then circulated into the engine 2 via the cooling water circulation conduit 8 after releasing its heat into the engine-cooling heat exchanger 20.

Meanwhile, the heat medium circulation pump 75 is driven when the heat consumer, that is, the heat pump type air conditioner 40, operates in the heating mode, the first and second valves 76 and 77 are controlled to operate in the pre-heater circulation mode. In this case, the directional valve 42 is switched to a heating mode, and the compressor 41 is driven.

When the first and second valves 76 and 77 are controlled to operate in the pre-heater circulation mode, the pre-heater circulation conduits 71 and 72 are opened, and the radiator circulation conduits 73 and 74 are closed.

During the operation of the heat medium circulation pump 75, the heat medium in the pre-heater circulation conduit 71 absorbs heat from the engine-cooling heat exchanger 20 while passing around the engine-cooling heat exchanger 20, and absorbs heat from the exhaust gas heat exchanger 30 while passing around the exhaust gas heat exchanger 30.

After absorbing heat from the engine-cooling heat exchanger 20 and exhaust gas heat exchanger 30, as described above, the heat medium is fed to the pre-heater 52 via the pre-heater circulation conduit 72, so that the heat medium releases the absorbed heat into the pre-heater 52. Thereafter, the heat medium is circulated around the engine-cooling heat exchanger 20.

Thus, waste heat from the engine-cooling heat exchanger 20 and exhaust gas heat exchanger 30 is recovered into the heat medium, and the recovered waste heat is transferred to the pre-heater 52. When the directional valve 42 is switched to the heating mode, and the compressor 41 is driven during the waste heat transferring process, the compressor 41 compresses low-temperature and low-pressure refrigerant gas, thereby changing the refrigerant gas into a high-temperature and high-pressure state. The high-temperature and high-pressure refrigerant gas is fed into the indoor heat exchanger 43 via the directional valve 42, and discharges its heat into indoor air while passing through the indoor heat exchanger 43, so that the refrigerant gas is condensed into a liquid state.

Subsequently, the condensed refrigerant is expanded while passing through the expansion device 44, and is then fed into the outdoor heat exchanger 45. The expanded refrigerant absorbs heat from outdoor air while passing through the outdoor heat exchanger 45, so that the refrigerant is evaporated.

The evaporated refrigerant is circulated into the compressor 41 via the directional valve 42.

On the other hand, outdoor air O blown toward the outdoor heat exchanger 45 is heated by the pre-heater 52. The heated outdoor air O then passes around the outdoor heat exchanger 45, thereby preventing the outdoor heat exchanger 45 from being frosted.

Meanwhile, during the operation of the heat consumer, that is, the heat pump type air conditioner 40, in the cooling mode, the heat medium circulation pump 75 is driven. In this case, the first and second valves 76 and 77 are also controlled to operate in the radiator circulation mode. Also, the radiator fan 64 is driven, the directional valve 42 is switched to the cooling mode, and the compressor 41 is driven.

When the first and second valves 76 and 77 are controlled to operate in the radiator circulation mode, the pre-heater circulation conduits 71 and 72 are closed, and the radiator circulation conduits 73 and 74 are opened, as shown in FIG. 2.

During the operation of the heat medium circulation pump 75, the heat medium absorbs heat from the engine-cooling heat exchanger 20 while passing around the engine-cooling heat exchanger 20, and is subsequently fed to the radiator heat exchanger 62 via the radiator circulation conduit 73.

The heat medium fed to the radiator heat exchanger 62 transfers, to the radiator heat exchanger 62, the heat absorbed from the engine-cooling heat exchanger 20, and is circulated around the engine-cooling heat exchanger 20 via the radiator circulation conduit 74.

During the operation of the radiator fan 64, the outdoor air is blown to the radiator heat exchanger 62 which, in turn, discharges heat into the blown outdoor air.

Meanwhile, when the directional valve 42 is switched to a cooling mode, and the compressor 41 is driven, the compressor 41 compresses low-temperature and low-pressure refrigerant gas, thereby changing the refrigerant gas into a high-temperature and high-pressure state. The high-temperature and high-pressure refrigerant gas is fed into the outdoor heat exchanger 45 via the directional valve 42, and discharges its heat into outdoor air while passing through the outdoor heat exchanger 45, so that the refrigerant gas is condensed into a liquid state.

Subsequently, the condensed refrigerant is expanded while passing through the expansion device 44, and is then fed into the indoor heat exchanger 43. The expanded refrigerant absorbs heat from indoor air while passing through the indoor heat exchanger 43, so that the refrigerant is evaporated.

The evaporated refrigerant is circulated into the compressor 41 via the directional valve 42.

On the other hand, the exhaust gas heat exchanger 30 discharges the heat absorbed from the exhaust gas to the atmosphere.

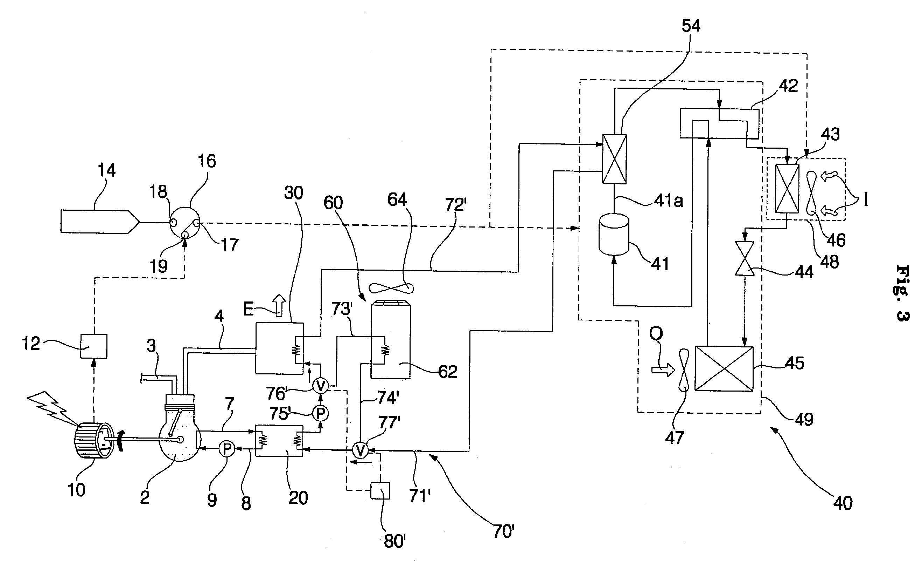

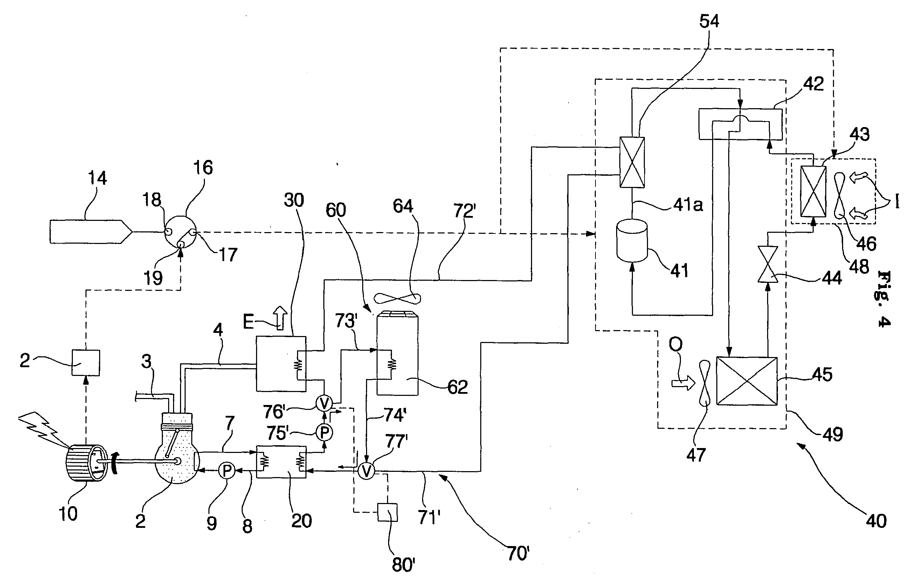

FIG. 3 is a schematic diagram of a cogeneration system according to a second embodiment of the present invention, illustrating a state in which a heat pump type air conditioner included in the cogeneration system operates in a heating mode. FIG. 4 is a schematic diagram of the cogeneration system according to the second embodiment of the cogeneration system, illustrating a state in which the heat pump type air conditioner operates in a cooling mode.

As shown in FIGS. 3 and 4, the cogeneration system includes a compressor discharge line heater 54 to heat a refrigerant passing through a discharge line 41a of the compressor 41, and a heat transfer means 70' to transfer heat from the engine-cooling heat exchanger 20 and heat from the exhaust gas heat exchanger 30 to the compressor discharge line heater 54 during a heating operation of the heat consumer, that is, the heat pump type air conditioner 40, and to transfer heat from the engine-cooling heat exchanger 20 to the radiator 60 during the cooling operation of the heat pump type air conditioner 40, and thus, to cause the radiator 60 to discharge the transferred heat. The cogeneration system of the second embodiment has the same configuration and functions as those of the first embodiment in association with the engine 2 and other elements, except for the compressor discharge line heater 54 and heat transfer means 70'. Accordingly, the constituent elements of the second embodiment respectively corresponding to those of the first embodiment are designated by the same reference numerals, and no detailed description thereof will be given.

The compressor discharge line heater 54 is arranged at one side of the discharge line 41a of the compressor 41 or is arranged to surround the discharge line 41a of the compressor 41.

The heat transfer means 70' includes compressor discharge line heater circulation conduits 71' and 72' to guide a heat medium to be circulated around the engine-cooling heat exchanger 20, exhaust gas heat exchanger 30, and compressor discharge line heater 54, radiator circulation conduits 73' and 74' to guide the heat medium to be circulated around the engine-cooling heat exchanger 20 and radiator 60, and a heat medium circulation pump 75' to pump the heat medium, and thus, to circulate the heat medium through the compressor discharge line heater circulation conduits 71' and 72' or the radiator circulation conduits 73' and 74'.

The radiator circulation conduits 73' and 74' are branched from the radiator circulation conduit 71' or 72' between the heat medium circulation pump 75' and the exhaust gas heat exchanger 30, and are joined to the radiator circulation conduit 71' or 72' upstream from the engine-cooling heat exchanger 20.

The heat medium circulation pump 75' is directly connected to the compressor discharge line heater circulation conduit 71' or 72' between the engine-cooling heat exchanger 20 and the exhaust gas heat exchanger 40.

The heat transfer means 70' further includes a valve means to open/close the compressor discharge line heater circulation conduits 71' and 72' or the radiator circulation conduits 73' and 74'.

The valve means includes a first valve 76' arranged at a branching region where the radiator circulation conduits 73' and 74' are branched from the compressor discharge line heater circulation conduit 71' or 72', and a second valve 77' arranged at a joining region where the radiator circulation conduits 73' and 74' are joined to the compressor discharge line heater circulation conduit 71' or 72'.

The heat transfer means 70' further includes a controller 80' to control the first and second valves 76' and 77' to operate, during a heating operation of the heat pump type air conditioner 40, in a compressor discharge line heater circulation mode in which the compressor discharge line heater circulation conduits 71' and 72' are opened, and the radiator circulation conduits 73' and 74' are closed, and to operate, during a cooling operation of the heat pump type air conditioner 40, in a radiator circulation mode in which the compressor discharge line heater circulation conduits 71' and 72' are closed, and the radiator circulation conduits 73' and 74' are opened.

In the cogeneration system according to this embodiment, when heat from the engine-cooling heat exchanger 20 is transferred to the compressor discharge line heater 54 during the heating operation of the heat pump type air conditioner 40, the refrigerant passing through the discharge line 41a of the compressor 41 is heated by the compressor discharge line heater 54.

The heated refrigerant passes through the indoor heat exchanger 14 via the directional valve 22, thereby increasing the indoor temperature over the case in which the refrigerant is not heated by the compressor discharge line heater 34.

Other operations and functions are the same as those of the first embodiment, so that no detailed description thereof will be given.

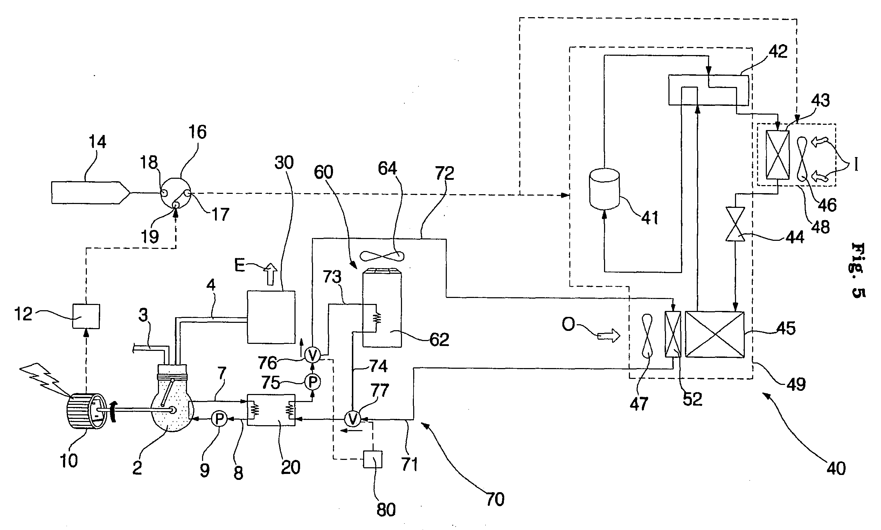

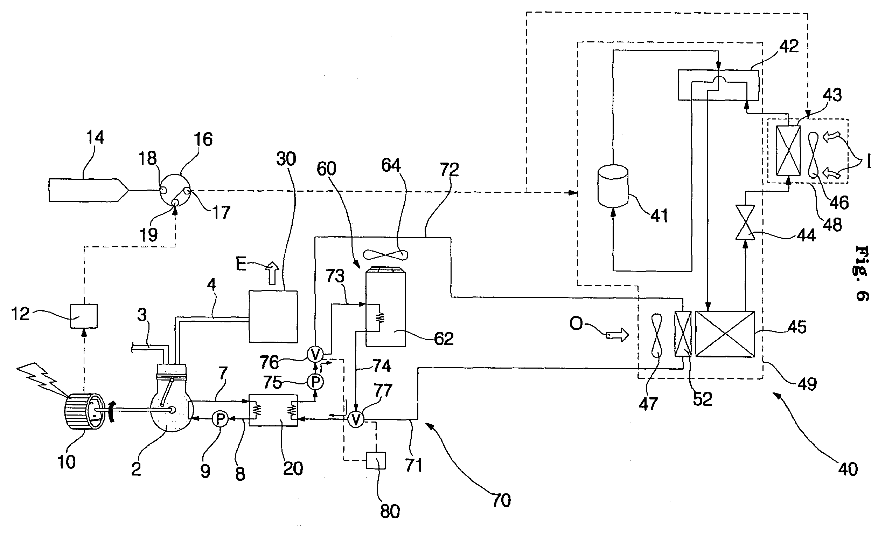

FIG. 5 is a schematic diagram of a cogeneration system according to a third embodiment of the present invention, illustrating a state in which a heat pump type air conditioner included in the cogeneration system operates in a heating mode. FIG. 6 is a schematic diagram of the cogeneration system according to the third embodiment of the cogeneration system, illustrating a state in which the heat pump type air conditioner operates in a cooling mode.

As shown in FIGS. 5 and 6, the cogeneration system includes a heat transfer means 70" to transfer heat from the engine-cooling heat exchanger 20 to the heat consumer, that is, the heat pump type air conditioner 40, during a heating operation of the heat pump type air conditioner 40, and thus, to allow the transferred heat to be used in the heat pump type air conditioner 40, and to transfer heat from the engine-cooling heat exchanger 20 to the radiator 60 during a cooling operation of the heat pump type air conditioner 40, and thus, to cause the radiator 60 to discharge the transferred heat.

The heat transfer means 70" includes pre-heater circulation conduits 71" and 72" to connect the engine-cooling heat exchanger 20 and the pre-heater 52, and thus, to guide the heat medium to be circulated around the engine-cooling heat exchanger 20 and pre-heater 52 without passing around the exhaust gas heat exchanger 30.

The cogeneration system of the third embodiment has the same configuration and functions as those of the first embodiment or second embodiment, except for the heat transfer means 70". Accordingly, the constituent elements of the third embodiment respectively corresponding to those of the first embodiment or second embodiment are designated by the same reference numerals, and no detailed description thereof will be given.

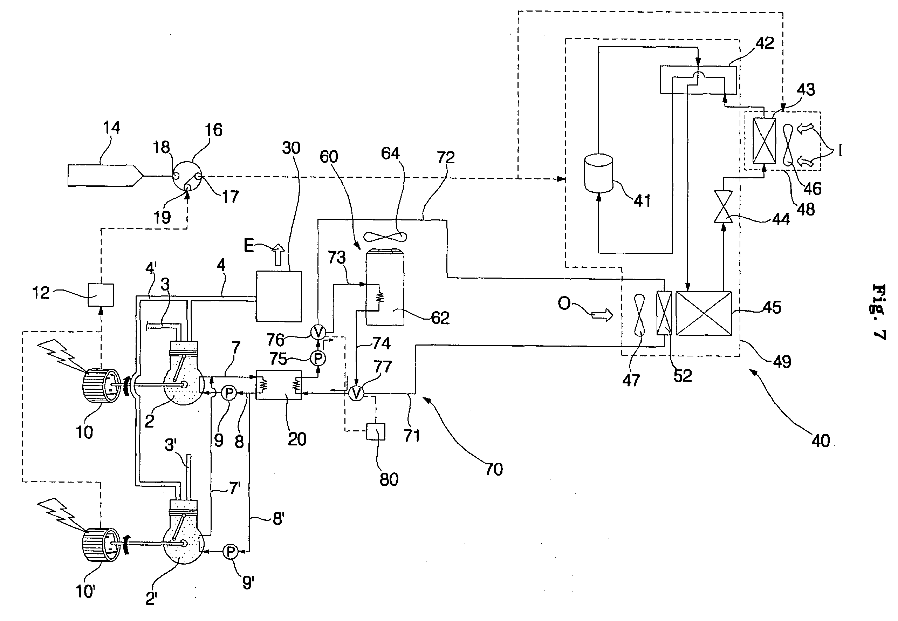

FIG. 7 is a schematic diagram of a cogeneration system according to a fourth embodiment of the present invention, illustrating a state in which a heat pump type air conditioner included in the cogeneration system operates in a cooling mode.

As shown in FIG. 7, the cogeneration system includes a plurality of engines 2, 2'.... The cogeneration system also includes a plurality of generators 10, 10'... connected to respective shafts of the engines 2, 2'.... The cogeneration system of the fourth embodiment has the same configuration and functions as those of any one of the first through third embodiments, except for the engines 2, 2'... and generators 10, 10'.... Accordingly, the constituent elements of the fourth embodiment respectively corresponding to those of any one of the first through third embodiments are designated by the same reference numerals, and no detailed description thereof will be given.

Only one or at least two of the engines 2, 2'... operate in accordance with the load to be cooled or heated.

Fuel tubes 3, 3'... are connected to respective engines 2, 2'.... Also, pairs of cooling water circulation conduits 7 and 8, 7' and 8'... are connected to respective engines 2, 2'....

Exhaust gas tubes 4, 4'... are connected in parallel.

The cooling water circulation conduits 7 and 8, 7' and 8'... are connected in parallel.

Cooling water circulation pumps 9, 9'... are directly connected to the cooling water circulation conduit 7 or 8, cooling water circulation conduit 7' or 8'..., respectively.

The cogeneration system of the fourth embodiment has the same configuration and functions as those of any one of the first through third embodiments, except that a plurality of engines 2, 2'..., a plurality of fuel tubes 3, 3'..., a plurality of exhaust gas tubes 4, 4'..., a plurality of cooling water circulation conduits 7, 8, 7', 8'..., and a plurality of generators 10, 10'... are used. Accordingly, the constituent elements of the fourth embodiment respectively corresponding to those of any one of the first through third embodiments are designated by the same reference numerals, and no detailed description thereof will be given.

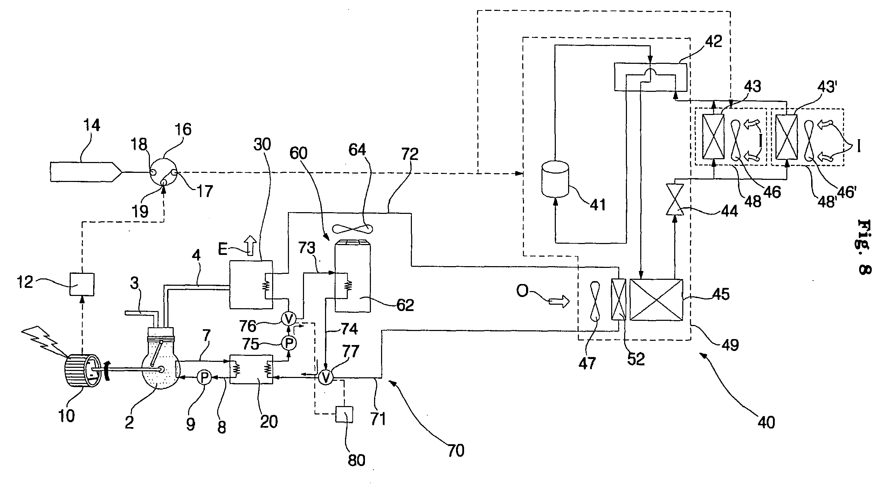

FIG. 8 is a schematic diagram of a cogeneration system according to a fifth embodiment of the present invention, illustrating a state in which a heat pump type air conditioner included in the cogeneration system operates in a cooling mode.

As shown in FIG. 8, the heat consumer, that is, the heat pump type air conditioner 40, which is included in the cogeneration system, is of a multi-type. That is, the heat pump type air conditioner 40 includes a plurality of indoor units 48, 48'..., and a single outdoor unit 49. The indoor units 48, 48'... include indoor heat exchangers 43, 43'..., which are connected in parallel, respectively.

The indoor units 48, 48'... also include indoor blowers 46, 46'..., respectively.

The cogeneration system of this embodiment has the same configuration and functions as those of any one of the first through fourth embodiments, except that the heat pump type air conditioner 40 includes a plurality of indoor units 48, 48'..., and thus, a plurality of indoor heat exchangers 43, 43'.... Accordingly, the constituent elements of the fifth embodiment respectively corresponding to those of any one of the first through fourth embodiments are designated by the same reference numerals, and no detailed description thereof will be given.

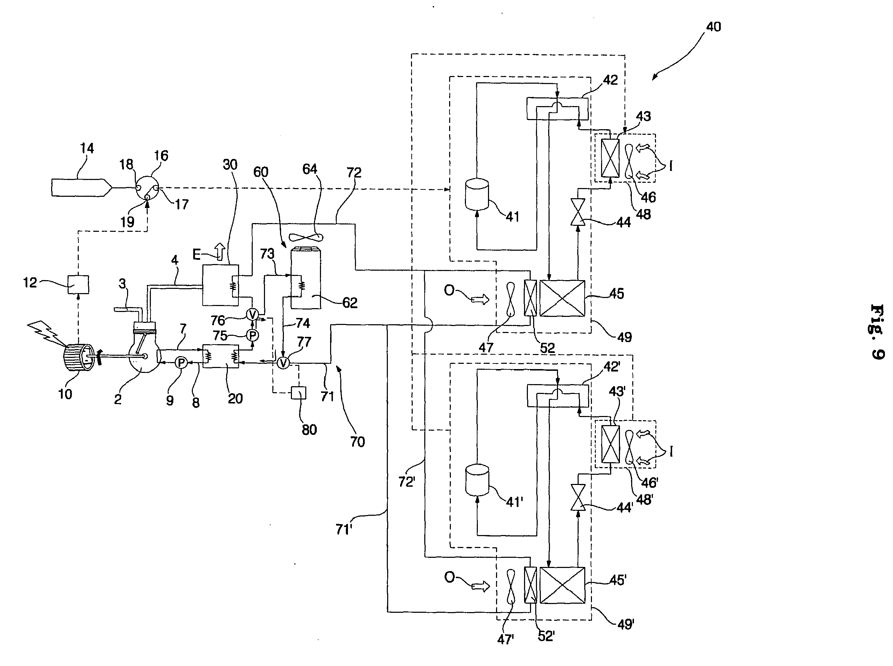

FIG. 9 is a schematic diagram of a cogeneration system according to a sixth embodiment of the present invention, illustrating a state in which a heat pump type air conditioner included in the cogeneration system operates in a cooling mode.

As shown in FIG. 9, the heat consumer, that is, the heat pump type air conditioner 40, which is included in the cogeneration system, includes a plurality of indoor units 48, 48'..., and a plurality of outdoor units 49, 49'....

In the heat pump type air conditioner 40, refrigerant conduits respectively included in the indoor units 48, 48'... may be connected in parallel. Refrigerant conduits respectively included in the outdoor units 49, 49'... may also be connected in parallel. The following description will be given in conjunction with the case in which each of the outdoor units 49, 49'... are connected to an associated one of the indoor units 48, 48'... to constitute one air conditioner set, and each air conditioner set operates independently of other air conditioner sets.

The indoor units 48, 48'... include respective indoor heat exchangers 43, 43'..., and respective indoor blowers 46, 46'....

The outdoor units 49, 49'... include respective compressors 41, 41'..., directional valves 42, 42'..., respective expansion devices 44, 44'..., respective outdoor heat exchangers 45, 45'..., and respective outdoor blowers 47, 47'.... The outdoor units 49, 49'... also include pre-heaters 52, 52'... or compressor discharge line heaters, respectively.

Each of the pre-heaters 52, 52'... are arranged upstream from an associated one of the outdoor heat exchangers 45, 45'....

Pairs of pre-heater circulation conduits 71 and 72, 71' and 72'..., which are connected in parallel, are connected to respective pre-heaters 52, 52'.... to guide a heat medium to be circulated around the pre-heaters 52, 52'....

The cogeneration system of this embodiment has the same configuration and functions as those of any one of the first through fifth embodiments, except that the heat pump type air conditioner 40 includes a plurality of indoor units 48, 48'..., a plurality of outdoor units 49, 49'..., a plurality of pre-heaters 52, 52'..., and a plurality of pre-heater circulation conduits 71, 72, 71', 72'.... Accordingly, the constituent elements of the sixth embodiment respectively corresponding to those of any one of the first through fifth embodiments are designated by the same reference numerals, and no detailed description thereof will be given.

The cogeneration system according to any one of the above-described embodiments of the present invention has various effects.

That is, the cogeneration system according to the present invention has advantages in that at least one of the heat of the engine-cooling heat exchanger and the heat of the exhaust gas heat exchanger is used in the heat consumer during a heating operation of the heat consumer, and the heat of the engine-cooling heat exchanger is transferred to the radiator to allow the transferred heat to be discharged from the radiator during a cooling operation of the heat consumer, so that it is possible to minimize the size of the radiator and the amount of air blown to the radiator, and to reduce costs and noise.

The cogeneration system according to the present invention also has an advantage in that the heat consumer is the heat pump type air conditioner including the compressor, directional valve, indoor heat exchanger, expansion device, and outdoor heat exchanger, and the heat pump type air conditioner further includes the pre-heater to receive heat from the heat transfer means during a heating operation of the heat pump type air conditioner, and thus, to pre-heat air blown toward the outdoor heat exchanger, so that it is possible to prevent the outdoor heat exchanger from being frosted during the heating operation of the heat pump type air conditioner.

In addition, the cogeneration system according to the present invention has an advantage in that the heat consumer is the heat pump type air conditioner including the compressor, directional valve, indoor heat exchanger, expansion device, and outdoor heat exchanger, and the heat pump type air conditioner further includes the compressor discharge line heater to receive heat from the heat transfer means during a heating operation of the heat pump type air conditioner, and thus, to heat the discharge line of the compressor, so that it is possible to enhance the heating performance of the indoor heat exchanger during the heating operation of the heat pump type air conditioner.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A cogeneration system comprising:
an engine;
a generator connected to an output shaft of the engine to generate electricity;
an engine-cooling heat exchanger to absorb heat from cooling water used to cool the engine;
an exhaust gas heat exchanger to absorb heat from exhaust gas discharged from the engine;
a heat consumer switchable to operate between a cooling mode and a heating mode;
a radiator to discharge heat; and
heat transfer means to transfer, to the heat consumer, at least one of the heat absorbed by the engine-cooling heat exchanger and the heat absorbed by the exhaust gas heat exchanger during an operation of the heat consumer in the heating mode, and thus, to allow the heat consumer to use the transferred heat, and to transfer, to the radiator, the heat absorbed by the engine-cooling heat exchanger during an operation of the heat consumer in the cooling mode, and thus, to cause the heat transferred to the radiator to be discharged from the radiator.

2. The cogeneration system according to claim 1, wherein the heat consumer is a heat pump type air conditioner, which comprises a compressor, a directional valve, an indoor heat exchanger, an expansion device, and an outdoor heat exchanger.

3. The cogeneration system according to claim 2, wherein the heat pump type air conditioner uses the electricity generated from the generator.

4. The cogeneration system according to claim 2, wherein the heat pump type air conditioner further comprises a pre-heater to receive heat from the heat transfer means, and thus, to pre-heat air blown toward the outdoor heat exchanger.

5. The cogeneration system according to claim 2, wherein the heat pump type air conditioner further comprises a compressor discharge line heater to receive heat from the heat transfer means, and thus, to heat a refrigerant passing through a discharge line of the compressor.

6. The cogeneration system according to any one of claims 2 to 5, wherein at least one of the engine, the generator, the compressor, the directional valve, the indoor heat exchanger, the expansion device, and the outdoor heat exchanger comprises a plurality of ones.

7. The cogeneration system according to any one of claims 1 to 5, wherein the radiator comprises a radiator heat exchanger connected to the heat transfer means, and a radiator fan to blow outdoor air to the radiator heat exchanger.

8. The cogeneration system according to claim 4, wherein the heat transfer means comprises:
a pre-heater circulation conduit to guide the heat medium to be circulated around the engine-cooling heat exchanger, the exhaust gas heat exchanger, and the pre-heater;
a radiator circulation conduit to guide the heat medium to be circulated around the engine-cooling heat exchanger and the radiator; and
a heat medium circulation pump to pump the heat medium, and thus, to circulate the heat medium through the pre-heater circulation conduit or the radiator circulation conduit.

9. The cogeneration system according to claim 8, wherein:
the heat medium circulation pump is directly connected to the pre-heater circulation conduit between the engine-cooling heat exchanger and the exhaust gas heat exchanger; and
the radiator circulation conduit is branched from the pre-heater circulation conduit between the heat medium circulation pump and the exhaust gas heat exchanger, and is joined to the pre-heater circulation conduit, upstream from the engine-cooling heat exchanger.

10. The cogeneration system according to claim 9, wherein the heat transfer means further comprises valve means to open/close the pre-heater circulation conduit or the radiator circulation conduit.

11. The cogeneration system according to claim 10, wherein the valve means comprises:
a first valve arranged at a branching region where the radiator circulation conduit is branched from the pre-heater circulation conduit; and
a second valve arranged at a joining region where the radiator circulation conduit is joined to the pre-heater circulation conduit.

12. The cogeneration system according to claim 11, wherein the heat transfer means further comprises:
a controller to control the first and second valves to operate, during a heating operation of the heat pump type air conditioner, in a pre-heater circulation mode in which the pre-heater circulation conduit is opened, and the radiator circulation conduit is closed, and to operate, during a cooling operation of the heat pump type air conditioner, in a radiator circulation mode in which the pre-heater circulation conduit is closed, and the radiator circulation conduit is opened.

13. A cogeneration system comprising:
an engine;
a generator connected to an output shaft of the engine to generate electricity;
an engine-cooling heat exchanger to absorb heat from cooling water used to cool the engine;
an exhaust gas heat exchanger to absorb heat from exhaust gas discharged from the engine;
a heat pump type air conditioner to use the electricity generated from the generator, the heat pump type air conditioner comprising a compressor, a directional valve, an indoor heat exchanger, an expansion device, and an outdoor heat exchanger;
a pre-heater to pre-heat air blown toward the outdoor heat exchanger;
a radiator to discharge heat; and
heat transfer means to transfer, to the pre-heater, at least one of the heat absorbed by the engine-cooling heat exchanger and the heat absorbed by the exhaust gas heat exchanger during a heating operation of the heat pump type air conditioner, and to transfer, to the radiator, the heat absorbed by the engine-cooling heat exchanger during a cooling operation of the heat pump type air conditioner, and thus, to cause the heat transferred to the radiator to be discharged from the radiator.

14. A cogeneration system comprising:
an engine;
a generator connected to an output shaft of the engine to generate electricity;
an engine-cooling heat exchanger to absorb heat from cooling water used to cool the engine;
an exhaust gas heat exchanger to absorb heat from exhaust gas discharged from the engine;
a heat pump type air conditioner to use the electricity generated from the generator, the heat pump type air conditioner comprising a compressor, a directional valve, an indoor heat exchanger, an expansion device, and an outdoor heat exchanger;
a compressor discharge line heater to heat a refrigerant passing through a discharge line of the compressor;
a radiator to discharge heat; and
heat transfer means to transfer, to the compressor discharge line heater, at least one of the heat absorbed by the engine-cooling heat exchanger and the heat absorbed by the exhaust gas heat exchanger during a heating operation of the heat pump type air conditioner, and to transfer, to the radiator, the heat absorbed by the engine-cooling heat exchanger during a cooling operation of the heat pump type air conditioner, and thus, to cause the heat transferred to the radiator to be discharged from the radiator.
